# EUROPEAN PATENT APPLICATION

(11) **EP 1 793 608 A1**
(43) Date of publication of application: **06.06.2007**
(21) Application number: 05300975.9
(22) Date of filing: 30.11.2005
(51) Int. Cl.: H04N 7/26, H04N 7/50

(54) **Method of error resilient video coding and means for implementing the method**

(71) Applicant: Thomson Licensing, 92100 Boulogne-Billancourt (FR)
(72) Inventor: Chen, Qu Qing, 100085 Beijing (CN); Chen, Zhi Bo 8F, Bldg A,, 100085 Beijing (CN); Gu, Xiao Dong, 100085 Beijing (CN)
(74) Representative: Rossmanith, Manfred

(57) **Abstract**

The present invention relates to an error resilient video coding method and a means utilizing the information derived from attention analysis to perform optimized attention based intra refresh by setting blocks inside attention area with a higher priority to be encoded into intra mode. The means for implementing the inventive method includes a controller for selecting frames in a video sequence to be encoded in intra mode and for setting blocks in the attention area with a higher priority to be encoded in intra mode, an attention area obtainer for extracting attention area in each selected frame of the video sequence, and an encoder for encoding the frames of the video sequence based on the result set in the preceding process. Advantageously, the subjective human vision property of the video sequence is improved.

## Description

### FIELD OF THE INVENTION

The present invention relates to video coding technology, and more particularly to a method of error resilient video coding and a means for implementing the method.

### BACKGROUND OF THE INVENTION

In the existing block based video coding methods, there are basically two types of coding modes: intra mode and inter mode. The intra mode only uses the information within a current frame, while the inter mode can use the information in previous frames as reference.

When encoded video is transmitted in error prone network, error happened in one frame will propagate to the subsequent frames due to the prediction of the inter mode. But coding in intra mode can suppress error propagation very well since it will not refer to former data. Therefore intra coding forcibly also called as intra refresh, is one of the most fundamental and useful tools for error resilient video coding.

In error resilient video coding, the intra refresh is an important method to quickly recover video subjective quality. I-frame is a special case of the intra refresh, which encodes a whole frame to be intra mode. However, this will produce a large amount of bits which will cause rate fluctuation. Practically, in the hybrid video coding framework, many other intra refresh methods have been proposed. These intra refresh methods only refresh part of a frame to be intra mode by some special rules. Basically error resilient video coding is usually combined with error concealment in the decoder side to achieve a better subjective quality.

The existing intra refresh methods can be classified into these four kinds: random intra refresh, motion-based intra refresh, rate-distortion based intra refresh and packet loss rate or feedback based intra refresh.

The random intra refresh randomly selects certain amount of blocks in a frame or in an area of the frame and encodes them in intra mode.

In the motion information based intra refresh, the motion information of a current block and a neighboring block or a corresponding block in the previous frame can be pre-calculated, and then the motion information or even the correlation of the frames will be checked to decide whether current block should be intra refreshed.

The rate-distortion based intra refresh uses the number of bits and the distortion generated by the coding mode to get an optimization of the rate and distortion. Here the distortion is considered not only the distortion caused by quantization in the encoder side but also the distortion caused by data loss in transmission and error concealment method in the decoder side. The error propagation effect can also be considered in the rate distortion strategy by using an error tracking map.

In the packet loss rate or feedback based intra refresh method, packet loss indication or packet loss rate or some other network communication parameters can be got by feedback from the network or a decoder. Hence a proper intra refresh rate could be determined by this feedback. While this method can not be applied in case no feedback channel is available, e.g. multicasting or broadcasting case.

However, all of current intra refresh methods have not taken subjective human vision property into account. For many video sequences, such as video conference, the video sequences mainly contain shoulder and header movements, and in some other conditions, people will be more likely to pay their attention to a certain area of the video. Meanwhile, some artifact on the attention area will produce a much worse subjective quality than the same amount of artifact on the non-attention area.

On the other side, for many video sequences attention area can be obtained by analyzing of low level features like intensity, colour etc., and mid-level features like temporal coherence, which can greatly help the error resilient performance in video coding.

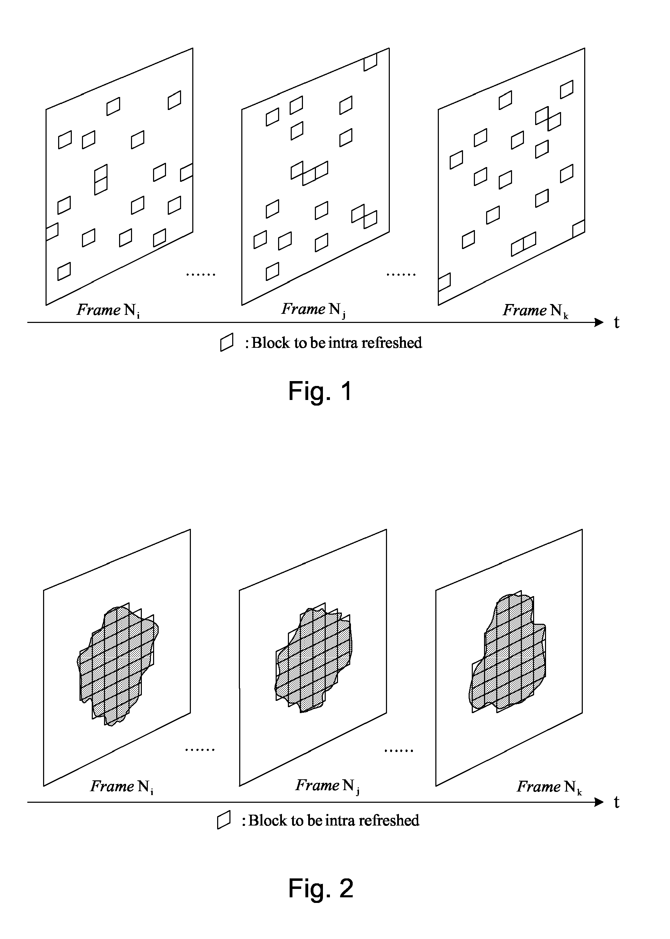

As shown in Fig.1, the random intra refresh will randomly select a certain number of blocks in the frame and codes them in the intra mode. For example in Frame Nᵢ, Nⱼ, Nₖ, the scattered blocks are forced to be refreshed in the intra mode while the other blocks which are not shown are coded in the inter mode. Here Nᵢ, Nⱼ and Nₖ could be continuous or discontinuous according to different parameter settings, and there are no I-frame appears between them. If some of the frames or slices between frame Nᵢ and frame Nⱼ are lost due to the transmission error, the decoder will do some error concealment such as frame copy or motion mapping. But none of these error concealment methods could provide a totally correct frame, so that some errors will propagate to the subsequent frames. Then in frame Nⱼ, the blocks are refreshed and correctly reconstructed because they are coded as intra mode which is independent of former corrupted reference frame, while the other blocks could not be refreshed and some drift error will be still contained in these blocks. Hence the decoded frame will show some annoying artifact, which will be observed obviously especially in the attention area. This artifact will be more visible in frame Nₖ due to error propagation.

Therefore, an improved error resilient video coding is desirable, which could obtain a good video subjective quality when the encoded video sequence is transmitted through an error prone network condition.

### SUMMARY OF THE INVENTION

The present invention provides an error resilient video coding method which utilizes the information derived from attention analysis to perform optimized intra refresh by setting blocks inside attention area of selected frames with higher priority to be intra refreshed based on the attention area.

In one aspect, the error resilient video coding method of the present invention employs an attention based intra refresh mode. The error resilient video coding method includes steps of selecting frames in a video sequence to be intra refreshed, extracting attention area in each selected frame of the video sequence; setting blocks in the attention area of the selected frames with higher priority to be encoded in the intra mode so as to generate an attention based intra refresh map, and finally encoding the video sequence based on the attention based intra refresh map generated from the preceding process. The attention area can be extracted by using the information of motion, intensity, colour, residual, texture, temporal coherence, and any other methods. The selection of frames to be intra refreshed can be conducted continuously or periodically, or depending on some other information such as motion or scene change.

Advantageously, the attention based intra refresh is employed in the error resilient video coding by taking the subjective human vision property into account. Since the areas to which human pays much attention have much higher priority to stop error propagation in case of packet loss, the video sequence encoded by the inventive method can be decoded so as to make a much better subjective feeling than other intra refresh methods.

In another aspect, the present invention provides a means for implementing the attention based intra refresh in the resilient video coding method. The means comprises a controller for selecting frames in a video sequence to be intra refreshed and setting blocks in the attention area with higher priority to be encoded in the intra mode, an attention area obtainer for obtaining/extracting attention area in each selected frames of the video sequence, and an encoder for encoding the video sequence based on an intra refresh map generated by the controller through setting the blocks in the attention area with higher priority to be intra refreshed.

Advantageously, the inventive means is used to implement the attention based intra refresh in the error resilient video coding so as to improve the video subjective human vision quality of the video sequence.

### BRIEF DESCRIPTION OF DRAWINGS

Fig.1 is schematic view showing the blocks to be intra refreshed according to the conventional existing video coding method;
Fig.2 is schematic view showing the blocks to be intra refreshed in the error resilient video coding method according to the present invention; and
Fig.3 is block diagram showing the schematic architecture of the means for implementing the error resilient video coding method in accordance with the present invention.

### DETAIL DESCRIPTION OF PREFERRED EMBODIMENTS

According to the present invention, an error resilient video coding method applying an attention based intra refresh mode is provided, especially, subjective human vision property is taken into account. Since the quality degradation in the non-attention area is not so perceivable as the quality degradation in human's attention area, and for many video sequences attention area can be automatically detected by analyzing low level features like intensity, colour etc. and mid-level features like temporal coherence, therefore, when the intra refresh is adopted to increase error resilience of video coding, information derived from attention analysis can be utilized by which blocks inside attention area have the higher priority to be encoded in intra mode. By this attention based intra refresh algorithm the decoded video stream can make a much better subjective feeling than other intra refresh methods.

Now with reference to Fig. 2, the error resilient video coding method will be explained in detail in a simplified example. Frame Nᵢ, Nⱼ, and Nₖ are selected frames of a video sequence to be intra refreshed. First, human's attention areas for these frames are analyzed as shown in the grey areas. Then the blocks in the attention area are setting in much higher priority to be encoded in the intra mode, thus an intra refresh map is generated for encoding. The video sequence is encoded based on the attention based intra refresh map. If there are some frames or slices are lost between the frame Nᵢ and the frame Nⱼ, the error will propagate to subsequent frames. But in frame Nⱼ, all the attention area will be correctly recovered due to intra refresh. Although frame Nⱼ may contain some artifact in the non-attention area, people will pay much less attention to them, therefore a much better subjective vision quality can be achieved by the proposed algorithm than the random intra refresh or some other intra refresh methods.

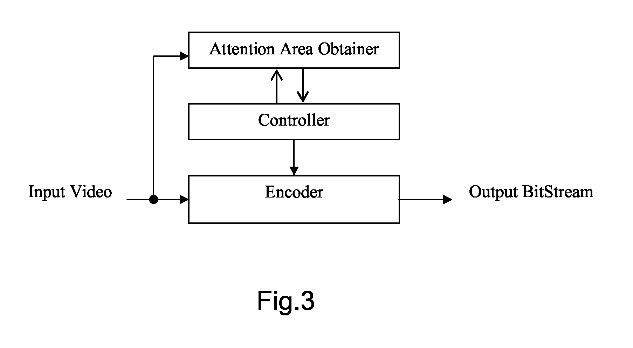

Fig.3 is a block diagram illustrating a schematic architecture of the means for implementing the error resilient coding method with the intra refresh algorithm in accordance with the present invention. The means generally includes a controller, an attention area obtainer and an encoder. The controller is intended to decide when and where to perform the intra refresh, i.e. to select frames in a video sequence to be intra refreshed. Through the selection of frames, the attention based intra refresh can be conducted in continuous frames, or periodically, or depending on some other information such as motion or scene change. When the controller decides to carry out intra refresh in the selected frames, the attention area obtainer will analysis these selected frames and output their attention areas. The attention area is the area people usually have more interest and want to achieve a better error resilient performance. The way to obtain attention area can use not only the information of motion, but also the intensity, colour, face detection, residual, texture, temporal coherence, and anything else. Based on these attention areas the controller generates the attention based intra refresh map, in which every block in the attention area is marked as intra mode or set with a high priority to be encoded in intra mode. Then the encoder performs encoding process based on the attention based intra refresh map generated by the controller.

Accordingly, the processing of error resilient video coding method in accordance with the present invention applying attention area based intra refresh comprises following steps: a first step for selecting frames of the video sequence to be intra refreshed; a second step for extracting/obtaining the attention area in each selected frame of the video sequence, a third step for setting the blocks in the attention area with higher priority to be intra refreshed and generating an attention based intra refresh map, and a fourth step for encoding the video sequence based on the attention based intra refresh map generated in the preceding process.

As being apparent from the foregoing description, the selection of frames to be encoded in intra mode make it possible for the process that the attention based intra refresh can be conducted in continuous frames, or periodically, or depending on some other information such as motion or scene change. When the controller decides to carry out intra refresh in the selected frames, it generates an intra refresh map which includes the analysis information of attention area of each selected frames. Finally the encoder performs encoding based on the intra refresh map, i.e. the result generated by the controller.

This invention combines subjective human vision property into the error resilient video coding. Since the areas to which human pays much attention have much higher priority to stop error propagation in case of packet loss, therefore the decoded video stream of the inventive method can make a much better subjective feeling than other intra refresh methods.

As described in the above description, the most important advantage of the present invention is to improve the video subjective human vision quality in video streaming in error prone network conditions. Since the video coding is performed in attention based intra refresh mode, the bit rate of the encoded video is also reduced. And it is also useful in video optimization such as mode decision and rate control, and the video trans-coding.

## Claims

1. An error resilient video coding method for video sequence, comprising steps of:
- selecting frames in the video sequence to be intra refreshed;
- extracting attention area in each selected frame of the video sequence;
- setting blocks in the attention area of the selected frames with higher priority to be encoded in intra mode; and
- encoding the video sequence based on a setting result generated in the preceding process.

2. The method as claimed in claim 1, **characterized in that** the attention area can be extracted by using the information of motion, intensity, colour, residual, texture and temporal coherence.

3. The method as claimed in claim 1, **characterized in that** the setting result is an attention based intra refresh is generated by setting blocks in the attention area of the selected frames with higher priority to be encoded in the intra mode.

4. The method as claimed in claim 3, **characterized in that** the selection of the frame to be encoded in intra mode can be conducted in continuous for the frames of the video sequence.

5. The method as claimed in claim 3, **characterized in that** the selection of the frame to be encoded in intra mode can be conducted periodically for the frames of the video sequence.

6. The method as claimed in claim 3, **characterized in that** the selection of the frame to be encoded in intra mode can be conducted depending on motion or scene change information of the frames.

7. Means for implementing error resilient video coding comprises
- a controller for selecting frames in a video sequence to be intra refreshed and setting blocks in attention areas of the selected frames with higher priority to be encoded in intra mode;
- an attention area obtainer for extracting attention area in each selected frame of a video sequence; and
- an encoder for encoding the frames of the video sequence based on a setting result generated by the controller.

8. The means as claimed in claim 7, **characterized in that** the attention area can be extracted by using the information of motion, intensity, colour, residual, texture and temporal coherence.

9. The means as claimed in claim 7, **characterized in that** the setting result generated by the controller is an attention based intra refresh map by setting blocks in the attention area of the selected frames with higher priority to be encoded in intra mode.

10. The means as claimed in any one of claims 7 to 9, **characterized in that** the selection of the frame to be encoded in intra mode can be conducted in continuous frames of the video sequence.

11. The means as claimed in any one of claims 7 to 9, **characterized in that** the selection of the frame to be encoded in intra mode can be conducted periodically for the frames of the video sequence.

12. The method as claimed in any one of claims 7 to 9, **characterized in that** selection of the frame to be encoded in intra mode can be conducted depending on motion and scene change information of the frames.
